# EUROPÄISCHE PATENTSCHRIFT

(11) **EP 1 193 431 B1**
(45) Veröffentlichungstag und Bekanntmachung des Hinweises auf die Patenterteilung: **08.06.2005**
(21) Anmeldenummer: 01203478.1
(22) Anmeldetag: 13.09.2001
(51) Int. Cl.: F16K 11/085, F16K 1/52

(54) **Ventil, insbesondere Heizkörperventil**
Valve, particularly radiator valve
Soupape, en particulier soupape de radiateur

(30) Priorität: 30.09.2000 DE 10048688
(43) Veröffentlichungstag der Anmeldung: 03.04.2002
(73) Patentinhaber: Danfoss A/S, 6430 Nordborg (DK)
(72) Erfinder: Messmer, James David, 8000 Aarhus (DK); Larsen, Arne Boerge, Virring, 8660 Skanderborg (DK)

(56) Entgegenhaltungen:
- DE-B- 1 139 707
- DE-C- 24 398
- DE-U- 9 421 996

## Beschreibung

Die Erfindung betrifft ein Ventil, insbesondere Heizkörperventil, mit einem Gehäuse, das einen Einlaßanschluß und einen Auslaßanschluß aufweist, wobei im Strömungsweg zwischen diesen beiden Anschlüssen eine Absperreinrichtung mit einem Ventilelement und einer Ventilsitzeinrichtung angeordnet ist.

Ein derartiges als Heizkörperventil ausgebildetes Ventil ist aus WO 99/22282 bekannt.

Üblicherweise ist bei einem derartigen Heizkörperventil die Durchströmrichtung vorgegeben und mit einem Pfeil auf der Außenseite des Gehäuses markiert. Die Durchströmrichtung sollte beachtet werden, um Störungen zu vermeiden, die sich vor allem durch unangenehme Geräusche bemerkbar machen. Normalerweise ist die ventilsitzseitige Seite der Absperreinrichtung mit dem Einlaßanschluß und die ventilelementseitige Seite der Absperreinrichtung mit dem Auslaßanschluß verbunden. Wenn das Ventilelement auf den Ventilsitz zu bewegt wird, findet eine allmähliche Drosselung des durchströmenden Wassers statt. Bei dieser "korrekten" Betriebsweise ergeben sich normalerweise keine Probleme.

Anders sieht es aus, wenn das Ventil falsch angeschlossen wird, d.h. die Speiseleitung eines Heizungssystem mit dem Auslaßanschluß verbunden wird. In diesem Fall strömt das Wasser über das Ventilelement zum Ventilsitz und von dort in den Einlaßanschluß. Wenn das Ventil schließt, wird das Ventilelement auf den Ventilsitz zu bewegt. Wenn der Spalt zwischen dem Ventilelement und dem Ventilsitz eine gewisse Größe unterschreitet, schließt das Ventilelement schlagartig, was einen ebenso plötzlichen Druckanstieg am Auslaßanschluß zur Folge hat. Dieser Druckanstieg äußert sich in einem Wasserschlag, der nicht nur unangenehme Geräusche zur Folge hat, sondern auch Beschädigungen im Leitungssystem hervorrufen kann. Dieser Wasserschlag kann aber auch durch einen externen Impuls ausgelöst werden, beispielsweise durch ein anderes Ventil, das plötzlich schließt oder öffnet, eine Pumpe, die anläuft oder stoppt, oder anderes. Diese Ursachen, die noch nicht alle restlos geklärt sind, sind besonders kritisch dann, wenn das Ventil falsch montiert ist.

Die Gefahr einer Fehlmontage von Heizkörperventilen ist nicht nur aufgrund von mangelnden Qualifikationen des Montagepersonals gegeben, sondern auch dann, wenn man in älteren Häusern oder Anlagen nicht mehr genau feststellen kann, welche Leitung zum Zufluß und welche zum Abfluß des Heizwassers verwendet wird.

Der Erfindung liegt die Aufgabe zugrunde, ein Ventil unabhängig von der Durchströmrichtung betreiben zu können.

Diese Aufgabe wird bei einem Heizkörperventil der eingangs genannten Art dadurch gelöst, daß die Ventilsitzeinrichtung zwei Ventilsitzausgänge aufweist, von denen der eine dem Einlaßanschluß und der andere dem Auslaßanschluß zugeordnet ist, wobei das Ventilelement und die Ventilsitzeinrichtung relativ zueinander verstellbar sind, so daß das Ventilelement wahlweise mit dem einen oder mit dem anderen Ventilsitzausgang zusammenwirkt.

Damit spielt es zunächst einmal keine Rolle, wie das Ventil montiert wird, d.h. ob der Einlaßanschluß tatsächlich mit der Leitung, über die die Heizflüssigkeit zugeführt wird, und der Auslaßanschluß mit der Leitung, über die die Heizflüssigkeit abgeführt wird, verbunden werden. Falls das Heizkörperventil nicht richtig montiert worden ist, wird einfach die Ausrichtung des Ventilelements zum entsprechenden Ventilsitzausgang geändert, so daß sichergestellt werden kann, daß das Ventilelement immer durch den Ventilsitz, mit dem es zusammenwirkt, hindurch angeströmt werden kann. In diesem Fall ist üblicherweise sichergestellt, daß keine störenden Geräusche, die etwa durch einen Wasserschlag bedingt sind, entstehen. Bezogen auf das Ventilelement kann also der Strömungsweg der Heizflüssigkeit im Heizkörperventil verändert werden.

Hierbei ist bevorzugt, daß das Ventilelement in einem Ventilelementgehäuse angeordnet ist und die Ventilsitzeinrichtung ein Gegengehäuse aufweist, wobei mindestens eines dieser beiden Teile Ventilelementgehäuse und Gegengehäuse verdrehbar im Gehäuse angeordnet ist. Durch das Verdrehen eines dieser beiden Teile läßt sich entweder das Ventilelement gegenüber der zuströmenden Flüssigkeit oder die zuströmende Flüssigkeit gegenüber dem Ventilelement positionieren. Eine Drehbewegung ist einfach auszuführen. Verdrehbare Teile sind relativ leicht gegeneinander abzudichten.

Hierbei ist bevorzugt, daß das verdrehbare Teil gegenüber dem Gehäuse mit einer Umfangsdichtung abgedichtet ist. Die Umfangsdichtung stellt auch bei einer Drehbewegung die Dichtigkeit zuverlässig sicher.

Bevorzugterweise ist das verdrehbare Teil über eine Sprengringanordnung im Gehäuse gehalten. Die Sprengringanordnung sichert das verdrehbare Teil gegen eine axiale Bewegung, läßt aber eine Drehbewegung zu.

Vorzugsweise ist das verdrehbare Teil in seinen beiden möglichen Funktionsstellungen mit dem Gehäuse verrastet. Damit kann ein Monteur auf einfache Weise erkennen, wann die richtige Drehstellung erreicht ist. Mit einer Rastanordnung läßt sich diese Position dann sichern. Falls erforderlich, läßt sich das Ventilelement relativ genau gegenüber dem Ventilsitz positionieren.

In einer bevorzugten Ausgestaltung ist vorgesehen, daß das Gegengehäuse als Rohr mit zwei in Axialrichtung und winkelmäßig zueinander versetzt angeordneten seitlichen Stutzen ausgebildet ist, wobei in Abhängigkeit von der Drehstellung des Rohres entweder der eine Stutzen in Überdeckung mit einer Ventilsitzöffnung oder der andere Stutzen in Überdeckung mit einer Abströmöffnung im Gehäuse kommt, wobei der jeweils andere Stutzen vom Gehäuse verschlossen ist. Auf diese Weise lassen sich die gewünschten Strömungswege im Heizkörperventil relativ einfach realisieren, ohne daß es notwendig ist, den Ventilsitz selbst zu bewegen. Falls der eine Stutzen mit der Ventilsitzöffnung in Überdeckung steht, kann die Heizflüssigkeit durch das Rohr zuströmen und das Ventilelement durch den Ventilsitz hindurch anströmen. Der Rückfluß erfolgt über die Abströmöffnung und außen um das Rohr herum. In der anderen Drehstellung erfolgt die Anströmung des Ventilelements ebenfalls durch den Ventilsitz hindurch, wobei die Heizflüssigkeit außen um das Rohr herumfließt. Die Abströmung erfolgt dann durch die Abströmöffnung in den anderen Stutzen und durch das Innere des Rohres. Mit einem entsprechenden Gegengehäuse, das auch als Kunststoffteil ausgebildet sein kann, läßt sich ein derartiges Heizkörperventil leicht realisieren.

Vorzugsweise weist das Gegengehäuse eine von außen zugängliche Drehmomentangriffsfläche auf. Über die Drehmomentangriffsfläche kann man das nötige Drehmoment auf das Gegengehäuse ausüben, um es im Gehäuse zu verdrehen. Beispielsweise kann es sich bei der Drehmomentangriffsfläche um einen Innensechskant handeln. Das Heizkörperventil läßt sich also auch noch dann verstellen, wenn es bereits eingebaut ist.

Hierbei ist bevorzugt, daß die Drehmomentangriffsfläche von einer lösbaren Kappe abgedeckt ist. Diese Kappe kann von außen auf das Gehäuse aufgeschraubt sein. Sie bietet einerseits einen Schutz der Drehmomentangriffsfläche vor Verschmutzung und kann andererseits noch dazu verwendet werden, das Heizkörperventil nach außen abzudichten.

In einer anderen Ausgestaltung ist vorgesehen, daß das Ventilelement exzentrisch im Ventilelementgehäuse angeordnet ist, wobei die Ventilsitzeinrichtung zwei Ventilsitze aufweist. Durch ein Verdrehen des Ventilelementgehäuses kann man das Ventilelement wahlweise mit dem einen oder mit dem anderen Ventilsitz zur Überdeckung bringen.

Die Erfindung wird im folgenden anhand eines bevorzugten Ausführungsbeispiels in Verbindung mit der Zeichnung näher beschrieben. Hierin zeigen:
- Fig. 1: eine erste Ausführungsform eines Heizkörperventils mit normaler Durchflußrichtung,
- Fig. 2: das Heizkörperventil mit entgegengesetzter Durchflußrichtung,
- Fig. 3: eine perspektivische Ansicht eines Gegengehäuses, und
- Fig. 4: eine zweite Ausgestaltung eines Heizkörperventils.

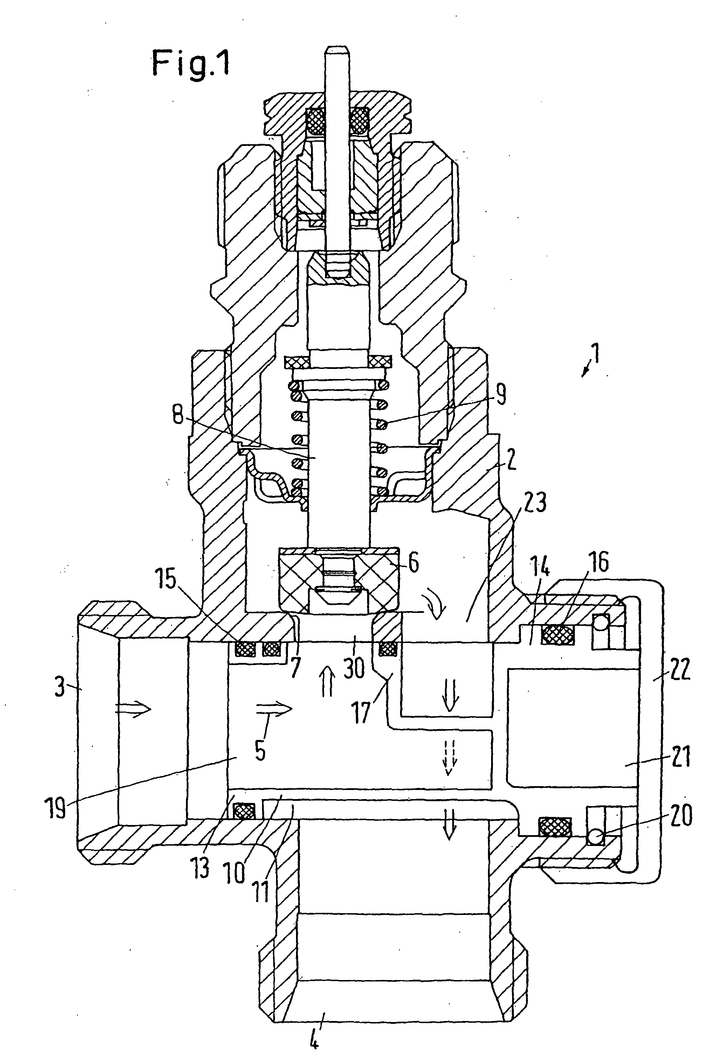

Fig. 1 zeigt ein Heizkörperventil 1 mit einem Gehäuse 2, das einen Einlaßanschluß 3 und einen Auslaßanschluß 4 aufweist. Pfeile 5 deuten einen Strömungsweg für eine Heizflüssigkeit, beispielsweise heißes Wasser, durch das Heizkörperventil an. In dem Strömungsweg ist eine Absperreinrichtung angeordnet, die ein Ventilelement 6 aufweist, das mit einem Ventilsitz 7 zusammenwirkt. Das Ventilelement 6 kann in nur schematisch dargestellter Weise von einem Ventilstößel 8 auf den Ventilsitz 7 zu oder von ihm wegbewegt werden. Eine Feder 9 ist vorgesehen, die das Ventilelement 6 ohne Auftreten äußerer Kräfte vom Ventilsitz 7 wegdrückt.

Die in Fig. 1 dargestellte Durchströmungsrichtung ist die "normale" Durchströmung, bei der das Ventilelement 6 durch den Ventilsitz 7 hindurch angeströmt wird. Damit ergeben sich weder beim Öffnen noch beim Schließen irgendwelche Probleme. Wenn das Ventilelement 6 auf den Ventilsitz 7 zubewegt wird, dann erfolgt eine allmähliche Drosselung der Wasserströmung dadurch, daß ein Spalt zwischen dem Ventilelement 6 und dem Ventilsitz 7 kontinuierlich kleiner gemacht wird, wobei der Antrieb des Ventilelements 6 ausschließlich über den Ventilstößel 8 erfolgt.

Problematisch wird das Schließverhalten allerdings dann, wenn sich die Strömungsrichtung durch das Heizkörperventil 1 umdreht. Eine derartige Situation kann beispielsweise bei einer falschen Montage auftreten und zwar entweder dadurch, daß der Monteur die Durchströmrichtung durch das Ventil nicht beachtet oder dadurch, daß er einfach nicht weiß, welche Leitung der Zufuhr und welche dem Abfluß der Heizflüssigkeit dient. In diesem Fall würde das Ventilelement 6 nicht durch den Ventilsitz 7 hindurch angeströmt, sondern genau anders herum. Dies hat beim Schließen zur Folge, daß das Ventilelement 6 schlagartig auf den Ventilsitz 7 abgesenkt wird, sobald ein gewisser Abstand unterschritten wird. Dieses schlagartige Absenken bewirkt einen sofortigen Stop des durchströmenden Wassers, was sich in einem sogenannten Wasserschlag bemerkbar macht. Dieser Wasserschlag führt zu erheblichen Geräuschen. Darüber hinaus können die Druckstöße, die mit diesem Wasserschlag verbunden sind, zu ernsthaften Beschädigungen im Heizungssystem führen.

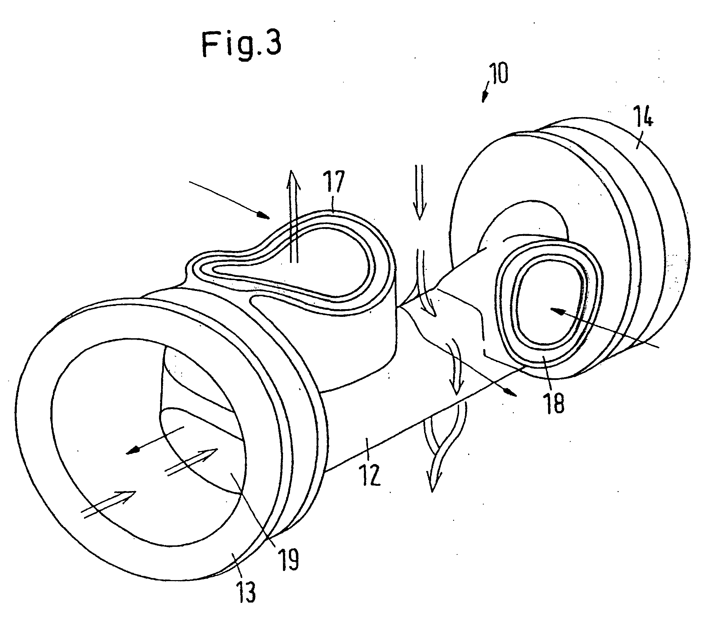

Um dieses Risiko zu vermeiden, weist das Heizkörperventil 1 ein in folgenden als Gegengehäuse 10 bezeichnetes Teil auf, das im Gehäuse 2 angeordnet ist. Das Gegengehäuse, das perspektivisch in Fig. 3 dargestellt ist, ist in einer Bohrung 11 angeordnet, die eine Verlängerung des Einlaßanschlusses 3 bildet. Das Gegengehäuse 10 ist als Rohr 12 mit einem ersten Flansch 13 und einem zweiten Flansch 14 ausgebildet, wobei die beiden Flansche 13, 14 abgedichtet im Gehäuse 2 gelagert sind. Zur Abdichtung werden 0-Ringe 15, 16 verwendet. Das Gegenhäuse 10 weist darüber hinaus zwei Stutzen 17, 18 auf, die an der Innenwand der Bohrung 11 anliegen und dort ebenfalls abgedichtet sind. Die beiden Stutzen 17, 18 sind axial zueinander versetzt auf dem Rohr 12 angeordnet und stehen mit dem Inneren 19 des Rohres in Verbindung. Sie sind auch winkelmäßig versetzt zueinander angeordnet, beispielsweise um 90 Grad. Das Gegenhäuse 10 ist verdrehbar im Gehäuse 2 gelagert und dort mit Hilfe eines Sprengring 20 gegen axiale Verschiebung gesichert. Eine Drehmomentangriffsfläche 21 ist vorgesehen, beispielsweise ein Innensechskant. Mit Hilfe dieser Drehmomentsangriffsfläche 21, die von außen zugänglich ist, kann nun das Gegengehäuse 10 im Gehäuse 2 verdreht werden. Die Drehmomentangriffsfläche kann noch durch eine Kappe 22 abgedeckt sein, die, gegebenenfalls unter Zwischenschaltung einer nicht näher dargestellten Dichtung, auf das Gehäuse aufgeschraubt ist.

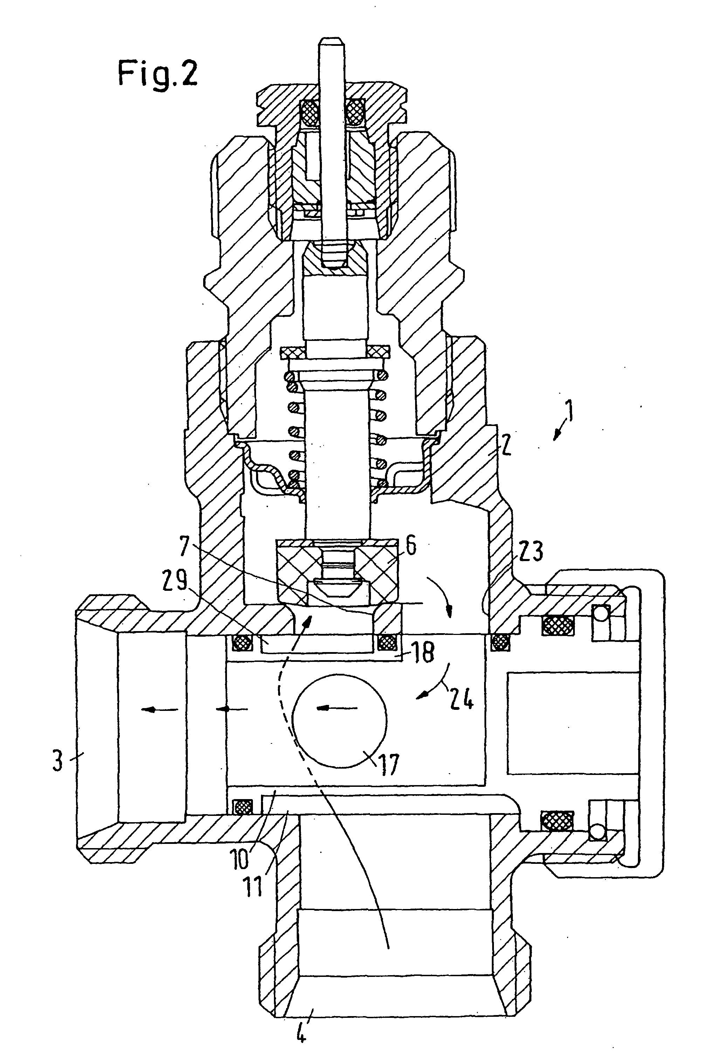

Mit Hilfe des Gegengehäuses 10 kann man nun erreichen, daß das Ventilelement 6 immer durch den Ventilsitz 7 hindurch angeströmt wird. Bei der "normalen" Durchströmung, die in Fig. 1 dargestellt ist, gelangt die Heizungsflüssigkeit vom Einlaßanschluß 3 durch das Innere 19 des Rohres 12 und den Stutzen 17 zum Ventilsitz 7 und strömt das Ventilelement 6 durch den Ventilsitz 7 hindurch an. Die durch den Spalt zwischen Ventilelement 6 und Ventilsitz 7 tretende Flüssigkeit kann dann durch eine Abströmöffnung 23 (Fig. 2), die neben dem Ventilsitz angeordnet ist, wieder in die Bohrung 11 eintreten, dort um das Rohr 12 außen herumfließen und schließlich in den Abflußanschluß 4 gelangen. Um dies zu verdeutlichen, sind die Pfeile 5 mit Doppelstrichen ausgeführt.

Fig. 2 zeigt nun eine Situation, bei der die Durchströmungsrichtung durch das Gehäuse 2 umgekehrt ist, d.h. die Heizungsflüssigkeit tritt am Auslaßanschluß 4 ein und am Einlaßanschluß 3 aus. Um dennoch zu gewährleisten, daß die Heizungsflüssigkeit, deren Weg durch Pfeile 24 mit einfachen Strichen dargestellt ist, das Ventilelement 6 ebenfalls durch den Ventilsitz anströmen kann, wird das Gegengehäuse 10 in der Bohrung 11 um 90 Grad gedreht. Dabei kommt der Stutzen 17 außer Eingriff mit dem Ventilsitz 7 und wird von der Innenseite der Bohrung 11 abgedeckt. Dafür kommt der Stutzen 18 in Überdeckung mit der Abströmöffnung 23. Die Heizungsflüssigkeit umströmt also das Rohr 12 und gelangt durch den Ventilsitz 7 zum Ventilelement 6. Von dort gelangt die Heizungsflüssigkeit durch die Abströmöffnung 23 und den Stutzen 18 in das Innere 19 des Rohres 12 und wird dort zum Einlaßanschluß 3 geleitet.

Die Strömungsrichtung der Heizungsflüssigkeit im Heizkörperventil 1 läßt sich also durch Verdrehen des Gegengehäuses auf einfache Art und Weise verändern. Bei dieser Ausgestaltung ist nur ein Ventilsitz 7 erforderlich, der unabhängig von der Durchströmungsrichtung der Heizungsflüssigkeit mit dem Ventilelement 6 zusammenwirkt.

Das Gegengehäuse 10 bildet also zwei Ventilsitzausgänge, nämlich einmal den Stutzen 17, der in Ausrichtung zum Ventilsitz 7 gebracht werden kann und zum anderen einen Raum 29, der zwischen der Außenseite des Rohres 12 und der Innenseite der Bohrung 11 angeordnet ist.

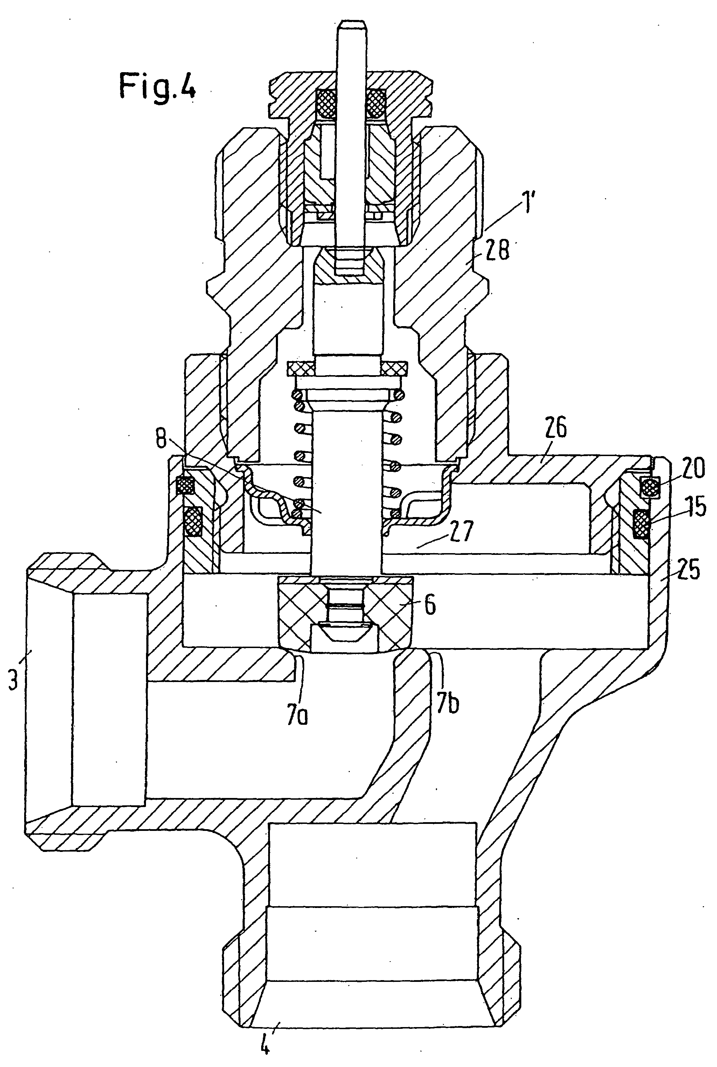

Fig. 4 zeigt eine abgewandelte Ausgestaltung, bei dem gleiche Teile mit gleichen Bezugszeichen versehen sind.

Das Heizkörperventil 1' weist nun ein Gehäuse 25 mit zwei Ventilsitzen 7a, 7b auf. Das Ventilelement 6 ist in einem Ventilelementgehäuse 26 angeordnet, das gegenüber dem Gehäuse 25 um eine Achse 27 verdrehbar ist. Das Ventilelement 6 ist exzentrisch zu dieser Achse 27 angeordnet, genau wie die Ventilsitze 7a, 7b. Wenn man also das Ventilelementgehäuse 26 um 180 Grad um die Achse 27 verdreht, dann kommt das Ventilelement 6 außer Eingriff mit dem Ventilsitz 7a und in Eingriff mit dem Ventilsitz 7b. In der in Fig. 4 dargestellten Position des Ventilelementgehäuses 26 ist das Ventilelement 6 für eine Durchflußrichtung vom Einlaßanschluß 3 zum Auslaßanschluß 4 positioniert. In diesem Fall wird das Ventilelement 6 durch den Ventilsitz 7a angeströmt.

In der nicht dargestellten anderen Position des Ventilelementgehäuses 26, bei der das Ventilelement 6 mit dem Ventilsitz 7b zusammenwirkt, ist die Strömungsrichtung in umgekehrte Richtung möglich, d.h. die Heizflüssigkeit kann vom Außlaßanschluß zum Einlaßanschluß 3 strömen. Auch in diesem Fall wird das Ventilelement 6 durch den Ventilsitz 7b hindurch angeströmt.

Das Ventilelementgehäuse 26 ist über den Sprengring 20 im Gehäuse 25 gehalten und über einen 0-Ring 15 abgedichtet.

In beiden Fällen (Fig. 1 bis 3 bzw. Fig. 4) kann das Anpassen des Heizkörperventils 1, 1' an die Durchströmung auch noch im eingebauten Zustand erfolgen. Bei der Ausgestaltung nach Fig. 4 läßt sich ein Moment über einen Anschlußstutzen 28 aufbringen, in dem der Ventilstößel 8 angeordnet ist.

In nicht näher dargestellte Weise kann man noch vorsehen, daß das Gegengehäuse 10 im Gehäuse 2 bzw. das Ventilelementgehäuse 26 im Gehäuse 25 nur in vorbestimmten Stellungen arretierbar ist. Dort können beispielsweise Rastelemente vorgesehen sein, etwa in Form von federgespannten Kugeln, die in entsprechende Vertiefungen auf der Umfangsfläche des Gegengehäuses 10 bzw. des Ventilelementgehäuses 26 einrasten. Zusätzlich oder alternativ dazu, kann auch eine Markierung auf der Außenseite vorgesehen sein, die die "richtige" Stellung der jeweils zu verdrehenden Teile anzeigt.

## Patentansprüche

1. Ventil, insbesondere Heizkörperventil, mit einem Gehäuse, das einen Einlaßanschluß (3) und ein Auslaßanschluß (4) aufweist, wobei im Strömungsweg zwischen diesen beiden Anschlüssen eine Absperreinrichtung mit einem Ventilelement (6) und einer Ventilsitzeinrichtung angeordnet ist, **dadurch gekennzeichnet, daß** die Ventilsitzeinrichtung zwei Ventilsitzausgänge (17, 29; 7a, 7b) aufweist, von denen der eine dem Einlaßanschluß und der andere dem Auslaßanschluß zugeordnet ist, wobei das Ventilelement (6) und die Ventilsitzeinrichtung relativ zueinander verstellbar sind, so daß das Ventilelement (6) wahlweise mit dem einen oder mit dem anderen Ventilsitzausgang (17, 29; 7a, 7b) zusammenwirkt.

2. Ventil nach Anspruch 1, **dadurch gekennzeichnet, daß** das Ventilelement (6) in einem Ventilelementgehäuse (26) angeordnet ist und die Ventilsitzeinrichtung ein Gegengehäuse (10) aufweist, wobei mindestens eines dieser beiden Teile Ventilelementgehäuse (26) und Gegengehäuse (10) verdrehbar im Gehäuse (3, 25) angeordnet ist.

3. Ventil nach Anspruch 2, **dadurch gekennzeichnet, daß** das verdrehbare Teil (10, 26) gegenüber dem Gehäuse (2, 25) mit einer Umfangsdichtung (15, 16) abgedichtet ist.

4. Ventil nach Anspruch 3, **dadurch gekennzeichnet, daß** das verdrehbare Teil (10, 26) über eine Sprengringanordnung (20) im Gehäuse (2) gehalten ist.

5. Ventil nach einem der Ansprüche 2 bis 4, **dadurch gekennzeichnet, daß** das verdrehbare Teil (10, 26) in seinen beiden möglichen Funktionsstellungen mit dem Gehäuse (2, 25) verrastet ist.

6. Ventil nach einem der Ansprüche 2 bis 5, **dadurch gekennzeichnet, daß** das Gegengehäuse (10) als Rohr (12) mit zwei in Axialrichtung und winkelmäßig zueinander versetzt angeordneten seitlichen Stutzen (17, 18) ausgebildet ist, wobei in Abhängigkeit von der Drehstellung des Rohres (12) entweder der eine Stutzen (17) in Überdeckung mit einer Ventilsitzöffnung (30) oder der andere Stutzen (18) in Überdeckung mit einer Abströmöffnung (23) im Gehäuse kommt, wobei der jeweils andere Stutzen (18, 17) vom Gehäuse (2) verschlossen ist.

7. Ventil nach Anspruch 6, **dadurch gekennzeichnet, daß** das Gegengehäuse (10) eine von außen zugängliche Drehmomentangriffsfläche (21) aufweist.

8. Ventil nach Anspruch 7, **dadurch gekennzeichnet, daß** die Drehmomentangriffsfläche (21) von einer lösbaren Kappe (22) abgedeckt ist.

9. Ventil nach einem der Ansprüche 2 bis 5, **dadurch gekennzeichnet, daß** das Ventilelement (6) exzentrisch im Ventilelementgehäuse (26) angeordnet ist, wobei die Ventilsitzeinrichtung zwei Ventilsitze (7a, 7b) aufweist.

## Claims

1. Valve, particularly radiator valve with a housing having an inlet connection (3) and an outlet connection (4), a shut-off device with a valve element (6) and a valve seat arrangement being located in the flow path between these two connections, **characterised in that** the valve seat arrangement has two valve seat outlets (17, 29; 7a, 7b), one being allocated to the inlet connection and the other to the outlet connection, the valve element (6) and the valve seat arrangement being adjustable in relation to each other, so that the valve element (6) interacts optionally with one valve outlet or the other (17, 29; 7a, 7b).

2. Valve according to claim 1, **characterised in that** the valve element (6) is located in a valve element housing (26) and the valve seat arrangement has a counter housing (10), at least one of these parts valve element housing (26) and counter housing (10) being arranged to be rotatable in the housing (2, 25).

3. Valve according to claim 2, **characterised in that** the rotatable part (10, 26) is sealed in relation to the housing (2, 25) with a circumferential sealing (15, 16).

4. Valve according to claim 3, **characterised in that** the rotatable part (10, 26) is held in the housing (2) by means of a lock ring arrangement (20).

5. Valve according to one of the claims 2 to 4, **characterised in that** in both of its possible function positions the rotatable part (10, 26) is locked with the housing (2, 25).

6. Valve according to one of the claims 2 to 5, **characterised in that** the counter housing (10) is made as a pipe (12) with two lateral adapters (17, 18), which are offset in the axial direction and in an angle in relation to each other, one adapter (17) overlapping a valve seat opening (30) or the other adapter (18) overlapping an outlet opening (23) in the housing in dependence of the rotation position of the pipe (12), the other adapter (18, 17) being closed by the housing.

7. Valve according to claim 6, **characterised in that** the counter housing (10) has a rotation torque application surface (21), which is accessible from the outside.

8. Valve according to claim 7, **characterised in that** the rotation torque application surface (21) is covered by a detachable cover (22).

9. Valve according to one of the claims 2 to 5, **characterised in that** the valve element (6) is located to be eccentric in the valve element housing (26), the valve seat arrangement having two valve seats (7a, 7b).

## Revendications

1. Robinet, en particulier robinet de radiateur, comprenant un boîtier qui présente un raccordement d'entrée (3) et un raccordement de sortie (4), dans lequel un dispositif de fermeture, comprenant un élément de robinet (6) et un moyen formant siège de robinet, est agencé entre ces deux raccordements, **caractérisé en ce que** le moyen formant siège de robinet comprend deux sorties de siège de robinet (17, 29 ; 7a, 7b), parmi lesquelles l'une des sorties est associée au raccordement d'entrée et l'autre est associée au raccordement de sortie, **en ce que** l'élément de robinet (6) et le moyen formant siège de robinet sont déplaçables l'un par rapport à l'autre de telle façon que l'élément de robinet (6) coopère au choix avec l'une ou avec l'autre des sorties de siège de robinet (17, 29 ; 7a, 7b).

2. Robinet selon la revendication 1, **caractérisé en ce que** l'élément de robinet (6) est agencé dans un boîtier d'élément de robinet (26), et le moyen formant siège de robinet comprend un boîtier antagoniste (10), et l'une au moins de ces deux pièces que sont le boîtier d'élément de robinet (26) et le boîtier antagoniste (10) est agencée avec possibilité de rotation dans le boîtier (3, 25).

3. Robinet selon la revendication 2, **caractérisé en ce que** la pièce capable de rotation (10, 26) est étanchée par rapport au boîtier (2, 25) avec un joint périphérique (15, 16).

4. Robinet selon la revendication 3, **caractérisé en ce que** la pièce capable de rotation (10, 26) est maintenue dans le boîtier (2) au moyen d'un agencement à bague élastique (20).

5. Robinet selon l'une des revendications 2 à 4, **caractérisé en ce que** la pièce capable de rotation (10, 26) est enclenchée avec le boîtier (2, 25) dans ses deux positions fonctionnelles possibles.

6. Robinet selon l'une des revendications 2 à 5, **caractérisé en ce que** le boîtier antagoniste (10) est réalisé sous forme de tube (12) avec deux manchons latéraux (17, 18) agencés en décalage l'un par rapport à l'autre en direction axiale et en disposition angulaire, et **en ce que**, en dépendance de la position de rotation du tube (12), soit l'un des manchons (17) vient en superposition avec une ouverture de siège de robinet (30) soit l'autre des manchons (18) vient en superposition avec une ouverture de sortie (23) dans le boîtier, et l'autre manchon respectif (18, 17) est refermé par le boîtier (2).

7. Robinet selon la revendication 6, **caractérisé en ce que** le boîtier antagoniste (10) comporte une surface d'application de couple de rotation (21) accessible de l'extérieur.

8. Robinet selon la revendication 7, **caractérisé en ce que** la surface d'application de couple de rotation (21) est coiffée par un capuchon détachable (22).

9. Robinet selon l'une des revendications 2 à 5, **caractérisé en ce que** l'élément de robinet (6) est agencé de façon excentrique dans le boîtier (26) de l'élément de robinet, et **en ce que** le moyen formant siège de robinet comprend deux sièges de robinet (7a, 7b).
